# FASCICULE DE BREVET EUROPEEN

(11) **EP 3 115 842 B1**
(45) Date de publication et mention de la délivrance du brevet: **22.05.2019**
(21) Numéro de dépôt: 16178260.2
(22) Date de dépôt: 06.07.2016
(51) Int. Cl.: G03B 17/53

(54) **CABINE PHOTOGRAPHIQUE**
FOTOAUTOMAT
PHOTOBOOTH

(30) Priorité: 10.07.2015 FR 1556552
(43) Date de publication de la demande: 11.01.2017
(73) Titulaire: Djoudi, Abdelhakim, 34070 Montpellier (FR)
(72) Inventeur: Djoudi, Abdelhakim, 34070 Montpellier (FR)
(74) Mandataire: Cornuejols, Georges

(56) Documents cités:
- EP-A2- 0 916 994
- EP-A2- 1 059 799
- WO-A1-91/11748
- WO-A2-03/090446
- JP-A- 2001 328 310

## Description

### DOMAINE TECHNIQUE DE L'INVENTION

La présente invention concerne une cabine photographique.

### ETAT DE LA TECHNIQUE

On connaît des cabines photographiques comportant, d'un côté, un capteur d'image, des sources de lumière et une imprimante et, de l'autre côté, une assise pour qu'un utilisateur puisse se positionner en face du capteur d'image pour réaliser des photographies d'identité ou fantaisiste.

On connaît le document EP 0 916 994 qui décrit une cabine photographique dans laquelle l'imprimante est en dessous du niveau de l'assise mais n'est pas en dessous de l'assise puisqu'aucune ligne verticale ne passe à la fois par l'assise et par l'imprimante. On connait aussi le document WO 03/090446 A2 qui divulgue un système portatif pour prendre des photos avec une assise comportant une imprimante.

Ces cabines présentent l'inconvénient d'être volumineuses, ce qui interdit leur implantation dans un certain nombre de lieux où elles pourraient être utiles.

De plus, ces cabines ne permettent pas de réaliser des photographies de qualité de nourrissons et de très jeunes enfants. En effet, le nourrisson ne peut tenir droit sur l'assise et sa tête est inclinée lorsqu'il est soutenu par un adulte déporté sur le côté de l'assise pour ne pas apparaître sur les photographies. Et, si l'adulte soutient le nourrisson devant lui, les photographies le représentent en arrière-plan, ce qui n'est pas autorisé pour une photographie d'identité et ce qui est disgracieux pour une photographie de fantaisie.

### OBJET DE L'INVENTION

La présente invention vise à remédier à tout ou partie de ces inconvénients.

Selon un premier aspect, la présente invention vise une cabine photographique, qui comporte :
- d'un côté, un capteur d'image et au moins une source de lumière et,
- du côté opposé, une assise pour qu'un utilisateur puisse se positionner en face du capteur d'image et une imprimante positionnée en dessous de l'assise, au moins une ligne verticale passant par l'assise et l'imprimante.

Grâce à ces dispositions, la cabine photographique peut posséder une emprise au sol et un encombrement hors tout très réduits. Du fait qu'au moins une ligne verticale passe à la fois par l'assise et par l'imprimante, l'emprise au sol totale de l'assise et de l'imprimante est inférieure à la somme de l'emprise au sol de l'assise et de l'emprise au sol de l'imprimante. Cette cabine photographique peut ainsi être implantée dans de nombreux lieux, tel que des magasins ou des galeries.

Dans des modes de réalisation, l'assise est montée sur un arbre reliant l'assise au sol, l'imprimante étant positionnée à côté dudit arbre.

Dans des modes de réalisation, l'imprimante est montée dans un caisson, l'assise prenant appui sur ledit caisson.

Dans des modes de réalisation, l'assise est montée sur une paroi verticale de la cabine photographique.

Dans des modes de réalisation, l'assise est fixe et le capteur d'image est mobile en translation verticale.

Dans des modes de réalisation, la cabine photographique objet de la présente invention comporte, de plus :
- une tablette mobile et un support configuré pour être fixé sur ou dans une paroi verticale de la cabine et pour supporter la tablette mobile en mouvement entre une configuration rétractée verticale le long de ladite paroi et une configuration déployée horizontale et
- un capteur d'image secondaire fixé sur ou dans le plafond de la cabine au-dessus de la tablette mobile dans sa configuration déployée,
la tablette mobile étant, en configuration déployée, positionnée entre l'assise et le capteur d'image en regard de l'assise.

Grâce à ces dispositions, des photographies d'un nourrisson ou d'un très jeune enfant peuvent être prises lorsqu'il est dans une position allongée en face du capteur d'image positionné au-dessus de la tablette mobile.

Dans des modes de réalisation, le support de la tablette mobile est muni d'une gâche retenant la tablette mobile en configuration rétractée, la gâche étant commandée par une unité centrale.

Grâce à ces dispositions, la tablette mobile ne peut pas être déployée par un utilisateur qui voudrait seulement se constituer une table pour son loisir ou son repas.

Dans des modes de réalisation, le dispositif objet de la présente invention comporte un capteur de configuration rétractée de la tablette mobile, une imprimante de photographie étant commandée en fonction du signal émis par le capteur de configuration rétractée pour ne pas imprimer de photographie tant que la tablette n'est pas en configuration rétractée.

Dans des modes de réalisation, le dispositif objet de la présente invention comporte un moyen de génération d'une animation visible configuré pour être installé sur ou dans le plafond de la cabine photographique.

Cette animation permet de capter l'attention du nourrisson ou du très jeune enfant pendant la durée de la séance de captures d'images. De plus, le regard du nourrisson ou du très jeune enfant est orienté vers le plafond et donc vers le capteur d'images.

Dans des modes de réalisation, le dispositif objet de la présente invention comporte au moins un déclencheur, la capture d'une image par le capteur d'image et la mémorisation de ladite image étant commandée par un dit déclencheur.

Grâce à ces dispositions, l'adulte qui accompagne le nourrisson ou le très jeune enfant peut déclencher la prise d'images susceptibles d'être imprimées, sans avoir à utiliser le déclencheur de la cabine photographique dans laquelle le dispositif est installé.

Dans des modes de réalisation, au moins un déclencheur est porté par la tablette mobile. Grâce à ces dispositions, l'adulte qui accompagne le nourrisson ou le très jeune enfant peut ne pas le quitter du regard lorsqu'il déclenche la capture d'images susceptibles d'être imprimées.

Dans des modes de réalisation, au moins un déclencheur est porté sur une paroi latérale de la tablette mobile. Grâce à ces dispositions, la main de l'adulte qui accompagne le nourrisson ou le très jeune enfant ne risque pas d'être visible en arrière-plan dans une image captée.

Dans des modes de réalisation, le dispositif objet de la présente invention comporte une unité centrale et un capteur de configuration de la tablette mobile, le déclencheur ne pouvant être actionné que si le capteur de configuration détecte que la tablette mobile est en configuration déployée et que l'unité centrale l'autorise.

Dans des modes de réalisation, la tablette mobile comporte une paroi transparente et un fond, placé, dans la configuration déployée, en dessous de la paroi transparente.

Grâce à ces dispositions, le fond observé par le capteur d'image est éloigné de la tête de l'enfant et les ombres de la tête de l'enfant sont atténuées sur les images captées, voire cachées derrière la tête de l'enfant.

Dans des modes de réalisation, la tablette mobile comporte des sources de lumière positionnées entre la paroi transparente et le fond.

Grâce à ces dispositions, on évite des ombres autour de la tête de l'enfant dans les images captées par le capteur d'image. Les photographies réalisées sont ainsi autorisées pour la réalisation de documents d'identité.

Dans des modes de réalisation, la tablette mobile comporte des rebords se trouvant, en configuration déployée, sur les côtés de la tablette, de part et d'autre de l'enfant.

On réduit ainsi le risque de chute de l'enfant.

Dans des modes de réalisation, la tablette mobile est munie d'une ceinture de sécurité pour retenir un jeune enfant en position allongée.

Dans des modes de réalisation, le dispositif objet de la présente invention comporte un capteur de configuration rétractée de la tablette mobile, une imprimante de photographie étant commandée par le capteur de configuration rétractée pour ne pas imprimer de photographie tant que la tablette n'est pas en configuration rétractée.

### BREVE DESCRIPTION DES FIGURES

D'autres avantages, buts et caractéristiques particulières de l'invention ressortiront de la description non limitative qui suit d'au moins un mode de réalisation particulier du dispositif objet de la présente invention, en regard des dessins annexés, dans lesquels :
- la figure 1 représente, schématiquement et en élévation, un mode de réalisation particulier d'une cabine photographique miniature objet de la présente invention,
- la figure 2 représente, schématiquement et en vue de dessus, une coupe de la cabine illustrée en figure 1,
- la figure 3 représente, schématiquement et en élévation, un deuxième mode de réalisation particulier d'une cabine photographique objet de la présente invention,
- la figure 4 représente, en vue en coupe partielle, une paroi de la cabine portant une tablette en configuration rétractée,
- la figure 5 représente, en vue en coupe partielle, une paroi de la cabine portant une tablette en configuration déployée,
- la figure 6 représente, en vue de dessus, une tablette d'un mode de réalisation de la cabine objet de la présente invention,
- les figures 7 à 9 sont équivalentes aux figures 3 à 5 pour un troisième mode de réalisation de la cabine objet de la présente invention,
- la figure 10 représente, en vue en coupe, un mode de réalisation préférentiel d'une tablette d'une cabine objet de la présente invention et

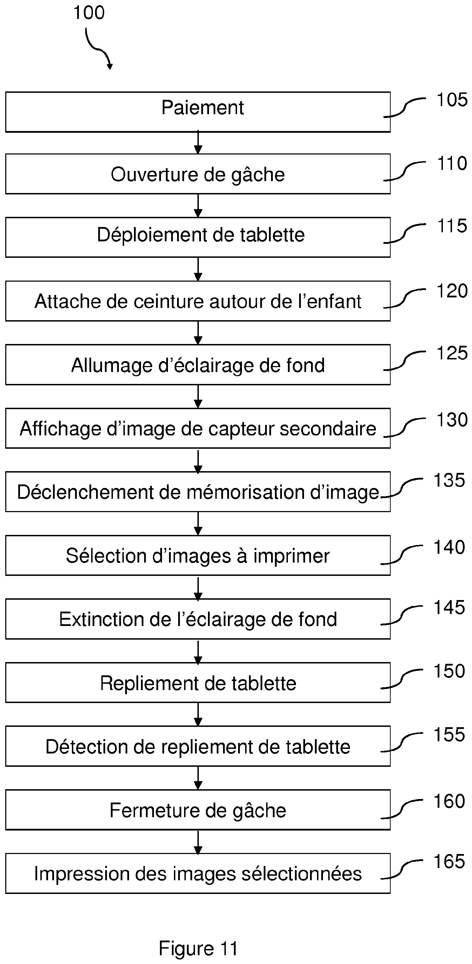

- la figure 11 représente, sous forme de logigramme, des étapes d'utilisation du dispositif et de la cabine le comportant.

### DESCRIPTION D'EXEMPLES DE REALISATION DE L'INVENTION

On note, dès à présent, que les figures ne sont pas à l'échelle.

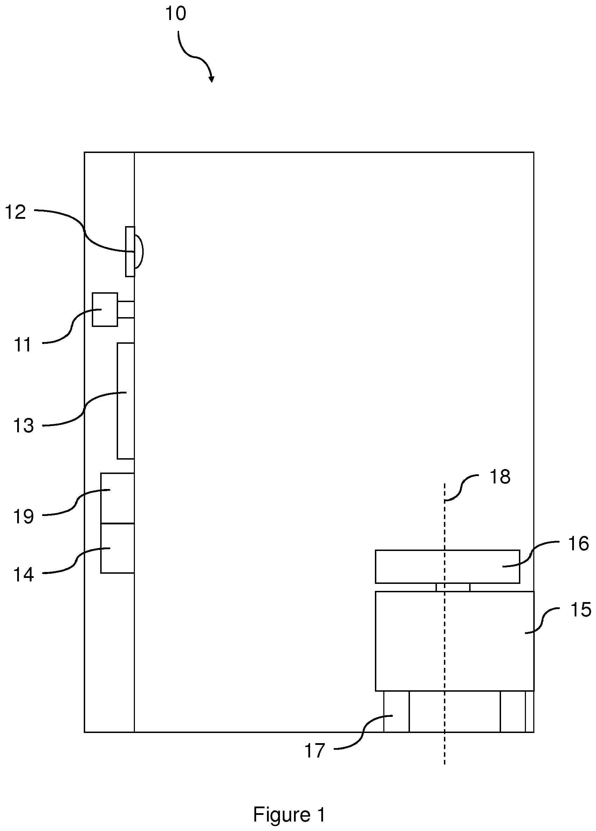

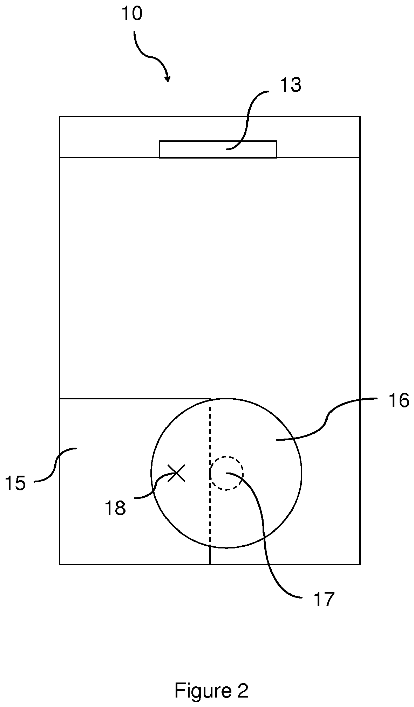

On observe, en figures 1 et 2, une cabine photographique 10 comportant, de manière connue, un capteur d'image principal 11, au moins une source de lumière 12, un écran d'affichage tactile 13, un monnayeur 14, une unité centrale 19, une imprimante 15 et une assise 16. Ne sont pas représentés, dans les figures, les mémoires de programmes et d'images. L'unité centrale 19 commande l'écran d'affichage tactile 13 pour y afficher une interface utilisateur et en recevoir des instructions de l'utilisateur assis sur l'assise 16. Une fois que le monnayeur a détecté le paiement d'un montant prédéterminé, l'unité centrale 19 autorise le fonctionnement du capteur d'image principal 11 et de chaque source de lumière primaire 12, sous le contrôle d'une interface utilisateur comportant l'écran d'affichage 13, puis de l'imprimante 15 pour imprimer les images sélectionnées par l'utilisateur assis sur l'assise 16.

Selon la présente invention, la cabine photographique 10 comporte :
- d'un côté (à gauche en figure 1 et en haut en figure 2), le capteur d'image principal 11 et au moins une source de lumière 12 et,
- du côté opposé (à droite en figure 1 et en bas en figure 2), l'assise 16 pour qu'un utilisateur puisse se positionner en face du capteur d'image principal 11 et l'imprimante 15 positionnée en dessous de l'assise, au moins une ligne verticale 18 passant successivement par l'assise et l'imprimante.

On voit, en figure 2, que de nombreuses autres lignes verticales passent par l'assise 16 et l'imprimante 15. Préférentiellement, la surface de recouvrement, c'est-à-dire la surface horizontale couverte par l'ensemble de ces lignes verticales couvre plus du tiers de l'emprise au sol de l'assise 16. Préférentiellement, la surface de recouvrement couvre plus d'un quart, préférentiellement plus d'un tiers, de l'emprise au sol de l'imprimante 15.

Selon les variantes, la sortie des photographies imprimées s'effectue sur le côté gauche en figure 2 ou sur la face en bas, en figure 2.

Dans le mode de réalisation illustré en figures 1 et 2, l'assise est montée sur un arbre reliant l'assise au sol, l'imprimante étant positionnée à côté dudit arbre.

Dans des modes de réalisation :
- l'imprimante est montée dans un caisson, l'assise prenant appui sur ledit caisson,
- l'assise est montée sur une paroi verticale de la cabine photographique et/ou
- l'assise est fixe et le capteur d'image est mobile en translation verticale.

Comme on le comprend à la lecture de la description qui précède, la cabine photographique objet de la présente invention peut posséder un encombrement hors tout très réduit. Cette cabine photographique peut ainsi être implantée dans de nombreux lieux, tel que des magasins ou des galeries.

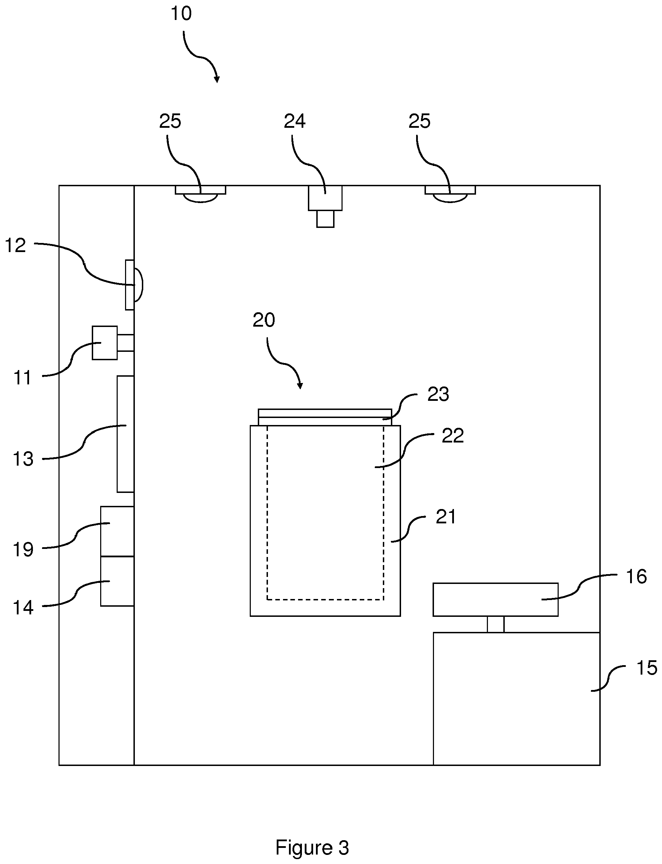

On observe, en figure 3, une cabine photographique 10 comportant, de manière connue, un capteur d'image principal 11, au moins une source de lumière primaire 12, un écran d'affichage tactile 13, un monnayeur 14, une unité centrale 19, une imprimante 15 et une assise 16. Conformément à la présente invention, l'assise est positionnée au-dessus de l'imprimante, au moins une verticale passant successivement par l'assise 16 et l'imprimante 15. Ne sont pas représentés, dans les figures, les mémoires de programmes et d'images. L'unité centrale 19 commande l'écran d'affichage tactile 13 pour y afficher une interface utilisateur et en recevoir des instructions de l'utilisateur assis sur l'assise 16. Une fois que le monnayeur a détecté le paiement d'un montant prédéterminé, l'unité centrale 19 autorise le fonctionnement du capteur d'image principal 11 et de chaque source de lumière primaire 12, sous le contrôle d'une interface utilisateur comportant l'écran d'affichage 13, puis de l'imprimante 15 pour imprimer les images sélectionnées par l'utilisateur assis sur l'assise 16.

En complément de cette cabine 10, on observe, en figure 3, un dispositif 20 comportant, dans une paroi verticale de la cabine 10, une tablette 22 munie d'une poignée 23 et supportée par un support 21 et, dans le plafond de la cabine 10, un capteur d'image secondaire 24 et des sources de lumière secondaires 25.

Les éléments composant la cabine photographique 10 sont bien connus de l'homme du métier.

Le capteur d'image principal 11 et le capteur d'image secondaire 24 sont par exemple, des capteurs d'images d'appareils photo numériques ou de caméra numérique. Ces capteurs d'images principal 11 et secondaire 24 sont associés, de manière connue en soi, à des sources de lumière 12 et 25 qui éclairent la scène dont des images sont captées. Le monnayeur 14 est adapté à recevoir des paiements en pièces, billets, cartes bancaires, de code prépayé ou d'appareils mobiles, par exemple à étiquette électronique (RFID ou NFC) ou de type téléphones mobiles. Le support 21 est, préférentiellement, métallique. Il est fixé à la paroi de la cabine 10 par au moins une équerre de fixation.

Dans le mode de réalisation illustré en figure 3, la cabine 10 objet de la présente invention comporte la tablette mobile 22 qui, en configuration déployée, est positionnée entre l'assise 16 et le capteur d'image principal 11 en regard de l'assise 16.

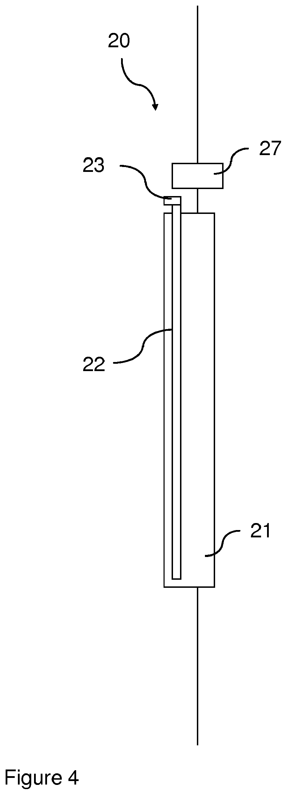

On retrouve, en figure 4, des éléments illustrés en figure 3, ainsi qu'une gâche électrique 27 qui bloque le déploiement de la tablette 27 tant que l'unité centrale 19 n'a pas détecté le paiement d'un montant prédéterminé. Le support 21 de la tablette mobile 22 est ainsi muni d'une gâche 27 retenant la tablette mobile 22 en configuration rétractée, la gâche 27 étant commandée par l'unité centrale 19. Ainsi, la tablette mobile 22 ne peut pas être déployée par un utilisateur qui voudrait seulement se constituer une table pour son loisir ou son repas.

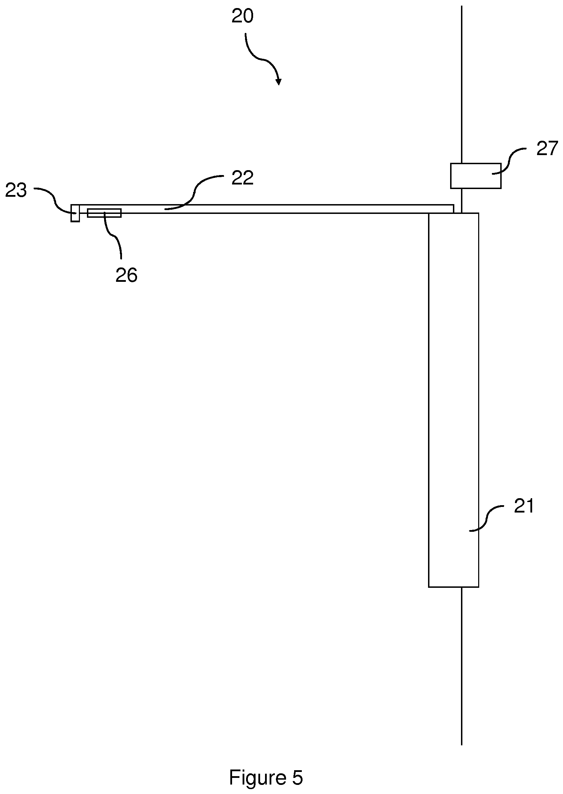

On retrouve, en figure 5, les éléments illustrés en figure 4 ainsi qu'un déclencheur 26. On observe, en figure 5, que la gâche électrique 27 a libéré le passage de la tablette depuis la configuration rétractée (figure 4) jusqu'à la configuration déployée (figure 5). Le déclencheur 26 permet à l'utilisateur adulte qui accompagne le jeu enfant allongé sur la tablette 22, de provoquer la mémorisation d'une image ou d'une séquence d'images captées par le capteur d'image secondaire 24. Ainsi, l'adulte qui accompagne le nourrisson ou le très jeune enfant peut déclencher la prise d'images susceptibles d'être imprimées, sans avoir à utiliser le déclencheur de la cabine photographique dans laquelle le dispositif est installé.

Dans le mode de réalisation illustré en figure 5, le déclencheur 26 est porté par la tablette mobile 22, sur la paroi de la tablette mobile 22 qui est en dessous lorsque la tablette mobile 22 est en configuration déployée horizontale.

Ainsi, l'adulte qui accompagne le nourrisson ou le très jeune enfant peut ne pas le quitter du regard lorsqu'il déclenche la capture d'images susceptibles d'être imprimées et la main de l'adulte qui accompagne le nourrisson ou le très jeune enfant ne risque pas d'être visible en arrière-plan.

Préférentiellement, le déclencheur ne peut être actionné que si un capteur de configuration (non représenté, par exemple par traitement d'images prises par le capteur d'image secondaire 24 ou par un contact sec positionné dans le support 21) détecte que la tablette mobile 22 est en configuration déployée et que l'unité centrale 19 l'autorise, par exemple lorsque le monnayeur 14 détecte qu'une somme d'argent prédéterminée a été payée.

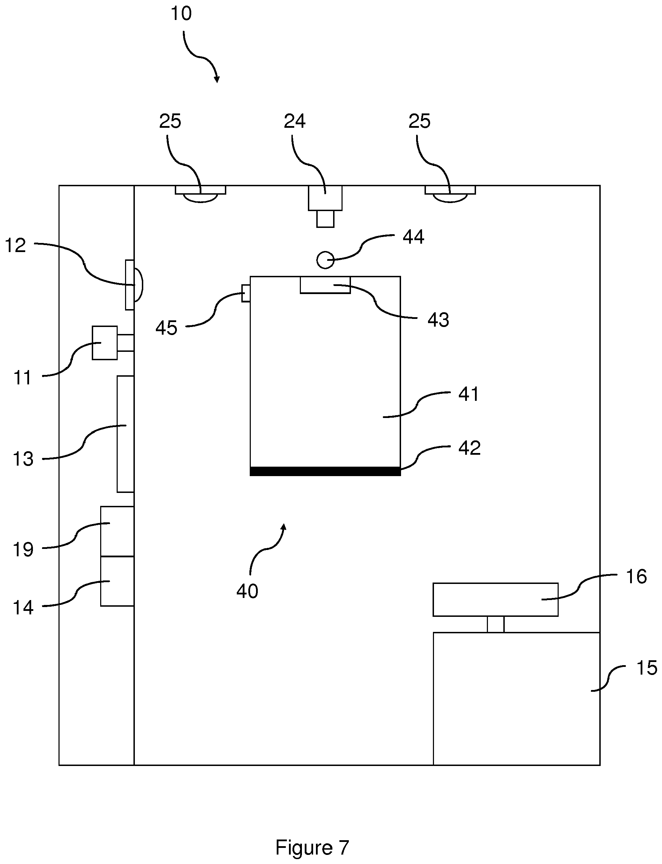

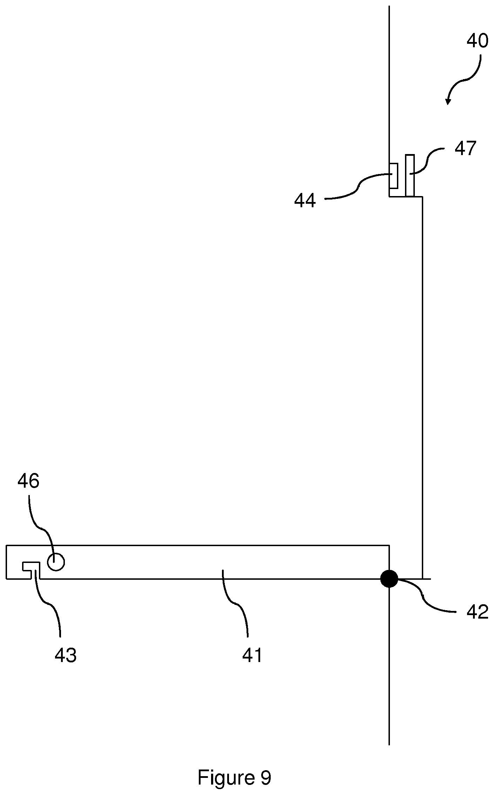

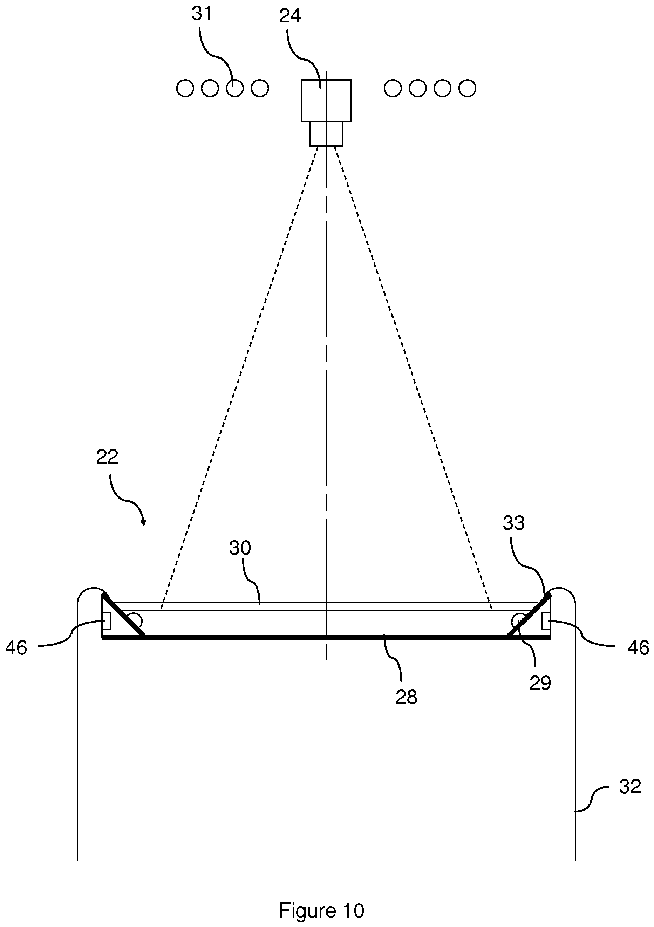

On observe, en figures 7 à 9, les mêmes éléments que dans les figures 3 à 5, respectivement, à l'exception du dispositif 20 qui est remplacé par un dispositif 40. Le dispositif 40 comporte, dans une paroi verticale de la cabine 10, une tablette 41 munie d'une poignée 43 et montée sur une charnière 42 et, dans le plafond de la cabine 10, un capteur d'image secondaire 24 et des sources de lumière secondaires 25. Un bouton de commande 44 permet de commander l'ouverture d'une gâche 47 et le déploiement de la tablette 41 dans une position horizontale. Au moins un bouton 46 est positionné sur une paroi latérale de la tablette 41 pour permettre à l'utilisateur adulte de déclencher la mémorisation d'une image captée par le capteur d'image secondaire 24. Dans le mode de réalisation illustré en figure 10, deux boutons permettent de provoquer la mémorisation d'une image captée par le capteur d'image secondaire 24 et d'effacer une image mémorisée.

Comme on l'observe en figure 7, dans sa position repliée, la tablette 41 affleure à la surface de la paroi verticale de la cabine 10 dans laquelle elle est implantée.

Un capteur magnétique 45 (figure 7) permet de détecter si la tablette 41 est dans la position repliée, ou non. Préférentiellement, la charnière 42 comporte un amortisseur pour éviter que la tablette se mette brutalement dans la position horizontale.

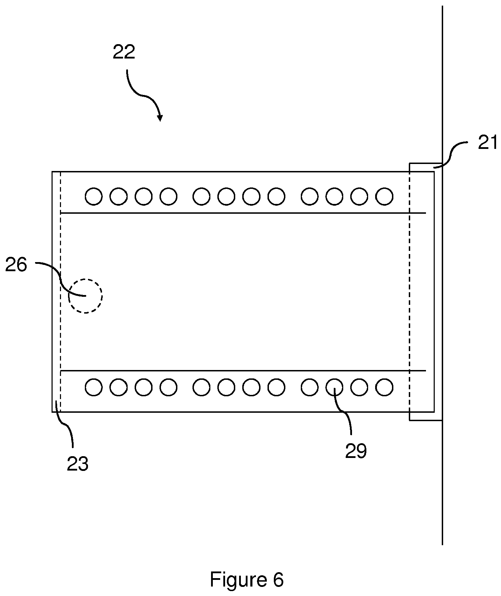

On observe, en figures 6 et 10, un mode de réalisation préférentiel de la tablette mobile 22 compatible avec les deux premiers modes de réalisation du dispositif objet de la présente invention. Dans ce mode de réalisation, la tablette mobile 22 comporte une paroi transparente 30, par exemple en plexiglas (marque déposée) ou en verre et un fond 28, placé, dans la configuration déployée, en dessous de la paroi transparente 30. Le fond 28 est, préférentiellement, de couleur blanche ou grise.

Ainsi, le fond 30 qui est observé par le capteur d'image secondaire 24 est éloigné de la tête de l'enfant et les ombres de la tête de l'enfant sont atténuées sur les images captées, voire cachées derrière la tête de l'enfant. La tablette mobile 22 comporte des sources de lumière 29, par exemple des diodes électroluminescentes, qui sont positionnées entre la paroi transparente 30 et le fond 28. Ces sources de lumière 29 évitent des ombres autour de la tête de l'enfant dans les images captées par le capteur d'image. Les photographies imprimées par l'imprimante 15 sont ainsi autorisées pour la réalisation de documents d'identité. La tablette mobile 22 comporte des rebords 33 dépassant au-dessus du plan supérieur de la paroi 30 et se trouvant, en configuration déployée de la tablette 22, sur les côtés de la tablette 22, de part et d'autre de l'enfant. On réduit ainsi le risque de chute de l'enfant. La tablette mobile 22 est munie d'une ceinture de sécurité 32 pour retenir un jeune enfant en position allongée.

Dans le mode de réalisation illustré en figures 6 et 7, le dispositif comporte un moyen 31 de génération d'une animation visible configuré pour sur ou dans le plafond de la cabine photographique 10. Par exemple, ce moyen 31 de génération est un ensemble de diodes électroluminescente, préférentiellement colorées. Cette animation permet de capter l'attention du nourrisson ou du très jeune enfant pendant la durée de la séance de captures d'images. De plus, le regard du nourrisson ou du très jeune enfant est orienté vers le plafond et donc vers le capteur d'images.

Préférentiellement, le dispositif objet de la présente invention comporte un capteur (non représenté) de configuration rétractée de la tablette mobile 22, l'imprimante 15 étant commandée pour ne pas imprimer de photographie tant que la tablette mobile 22 n'est pas en configuration rétractée. Le capteur de configuration de la tablette mobile 22 peut être basé sur un traitement d'images captées par le capteur d'image secondaire 24 ou sur un contact sec positionné dans le support 21.

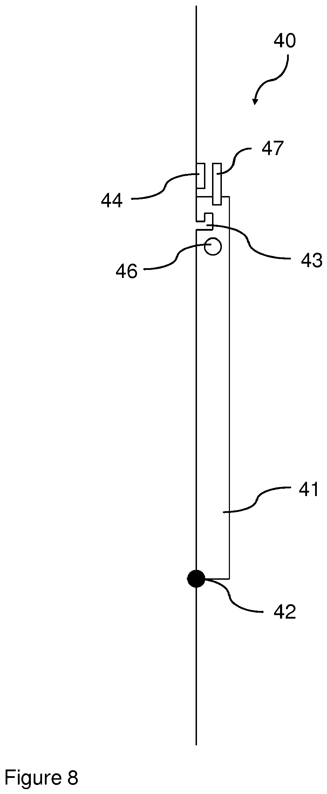

On observe, en figure 8, un procédé 100 de fonctionnement de la cabine 10 et, particulièrement, des éléments du dispositif 20. Au cours d'une étape 105, l'utilisateur paye le montant demandé en utilisant le monnayeur 14.

Au cours d'une étape 110, l'unité centrale détecte ce paiement et commande l'ouverture de la gâche électrique 27 pour libérer le passage de la tablette mobile 22, si l'utilisateur le demande. Pour effectuer cette demande, l'utilisateur utilise, par exemple l'interface utilisateur affichée sur l'écran d'affichage tactile 13, le déclencheur 26 ou un déclencheur dédié positionné sur le support 21 ou sur la tablette mobile 22.

On suppose, dans la suite de la description de la figure 8, que l'utilisateur demande le déploiement de la tablette 22. Sinon, le fonctionnement de la cabine photographique 10 est tel que connu dans l'art antérieur.

Au cours d'une étape 115, l'utilisateur déploie la tablette 22 en tirant vers le haut sa poignée 23 puis en rabattant horizontalement la tablette 22. Au cours d'une étape 120, l'utilisateur allonge l'enfant sur la tablette 22 et ferme la ceinture de sécurité 32 autour de l'enfant.

Si le dispositif comporte un capteur de configuration déployée de la tablette 22 ou un capteur de fermeture de la ceinture de sécurité 27, dès que chacun de ces capteurs confirme la réalisation des étapes 115 et 120, on provoque l'allumage de l'éclairage de fond de la tablette 22 au cours d'une étape 125. Dans les autres cas, on provoque l'allumage de l'éclairage de fond et les étapes suivantes simultanément à l'ouverture de la gâche 27.

Au cours d'une étape 130, on affiche, sur l'écran d'affichage 13, les images captées par le capteur d'image secondaire 24. L'utilisateur peut alors déplacer l'enfant pour qu'il soit mieux cadrer et attendre une image qui lui plait.

Au cours d'une étape 140, l'utilisateur sélectionne une image ou une séquence d'images à mémoriser, en actionnant le déclencheur 26. Chaque image sélectionnée est conservée en mémoire (non représentée) et l'utilisateur est invité à valider la sélection réalisée jusqu'à ce que le nombre d'images validées corresponde au nombre d'images à imprimer.

Une fois les images mémorisées au cours de l'étape 140, le dispositif provoque l'extinction de l'éclairage de fond 28 au cours d'une étape 145. L'utilisateur replie alors la tablette 22 dans le support 21, au cours d'une étape 150. Dès que le dispositif détecte cette rétractation de la tablette 22, au cours d'une étape 155, il provoque la fermeture de la gâche 27 au cours d'une étape 160.

L'imprimante 15 provoque alors l'impression des images sélectionnées puis validées.

Comme on le comprend à la lecture de la description qui précède, le dispositif objet de la présente invention permet la capture et l'impression de photographies d'un nourrisson ou d'un très jeune enfant dans une position allongée sur la tablette 22, en face du capteur d'image secondaire 24. La tête de l'enfant est ainsi dans le prolongement de son corps, dans une position plus naturelle que si elle est supportée par les bras ou mains d'un adulte. De plus, le fond des photographies est uni, plus esthétique que le torse d'un adulte et conforme aux prescriptions légales.

## Revendications

1. Cabine photographique (10), qui comporte :
- d'un côté, un capteur d'image principal (11) et au moins une source de lumière (12) et,
- du côté opposé, une assise (16) pour qu'un utilisateur puisse se positionner en face du capteur d'image ; et une imprimante (15)
**caractérisée en ce que** l'imprimante (15) est positionnée en dessous de l'assise, au moins une ligne verticale passant par l'assise et l'imprimante.

2. Cabine photographique (10) selon la revendication 1, dans laquelle l'assise (16) est montée sur un arbre (17) reliant l'assise au sol, l'imprimante étant positionnée à côté dudit arbre.

3. Cabine photographique (10) selon l'une des revendications 1 ou 2, dans laquelle l'imprimante est montée dans un caisson, l'assise prenant appui sur ledit caisson.

4. Cabine photographique (10) selon l'une des revendications 1 ou 2, dans laquelle l'assise est montée sur une paroi verticale de la cabine photographique.

5. Cabine photographique (10) selon l'une des revendications 1 à 4, dans laquelle l'assise est fixe et le capteur d'image est mobile en translation verticale.

6. Cabine photographique (10) selon l'une des revendications 1 à 5, qui comporte :
- une tablette mobile (22) et un support (21) configuré pour être fixé sur ou dans une paroi verticale de la cabine et pour supporter la tablette mobile en mouvement entre une configuration rétractée verticale le long de ladite paroi et une configuration déployée horizontale et
- un capteur d'image secondaire (24) fixé sur ou dans le plafond de la cabine au dessus de la tablette mobile dans sa configuration déployée,
la tablette mobile (22) étant, en configuration déployée, positionnée entre l'assise (16) et le capteur d'image principal (11) en regard de l'assise.

7. Cabine photographique (10) selon la revendication 6, dans lequel le support (21) de la tablette mobile (22) est muni d'une gâche (27) retenant la tablette mobile en configuration rétractée, la gâche étant commandée par une unité centrale (19).

8. Cabine photographique (10) selon l'une des revendications 6 ou 7, qui comporte un capteur de configuration rétractée de la tablette mobile (22), ladite imprimante de photographie (15) étant commandée en fonction du signal émis par le capteur de configuration rétractée pour ne pas imprimer de photographie tant que la tablette n'est pas en configuration rétractée.

9. Cabine photographique (10) selon l'une des revendications 6 à 8, qui comporte un moyen de génération (31) d'une animation visible configuré pour être installé sur ou dans le plafond de la cabine photographique (10).

10. Cabine photographique (10) selon l'une des revendications 6 à 9, qui comporte au moins un déclencheur (26), la capture d'une image par le capteur d'image secondaire (24) et la mémorisation de ladite image étant commandée par un dit déclencheur.

11. Cabine photographique (10) selon la revendication 10, dans lequel au moins un déclencheur (26) est porté par la tablette mobile (22).

12. Cabine photographique (10) selon l'une des revendications 10 ou 11, dans lequel au moins un déclencheur (26) est porté sur une paroi latérale de la tablette mobile (22).

13. Cabine photographique (10) selon l'une des revendications 10 à 12, qui comporte une unité centrale (19) et un capteur de configuration de la tablette mobile (22), le déclencheur (26) ne pouvant être actionné que si le capteur de configuration détecte que la tablette mobile est en configuration déployée et que l'unité centrale l'autorise.

14. Cabine photographique (10) selon l'une des revendications 6 à 13, dans lequel la tablette mobile (22) comporte :
- une paroi transparente (30) et un fond (28), placé, dans la configuration déployée, en dessous de la paroi transparente et
- des sources de lumière (29) positionnées entre la paroi transparente (30) et le fond (28).

15. Cabine photographique (10) selon l'une des revendications 6 à 14, dans lequel la tablette mobile (22) comporte des rebords (33) se trouvant, en configuration déployée, sur les côtés de la tablette, de part et d'autre de l'enfant et/ou la tablette mobile (22) est munie d'une ceinture de sécurité (32) pour retenir un jeune enfant en position allongée.

## Patentansprüche

1. Fotokabine (10), die umfasst:
- auf einer Seite einen Haupt-Bildsensor (11) und wenigstens eine Lichtquelle (12) und
- auf der entgegengesetzten Seite eine Sitzfläche (16), damit ein Benutzer sich gegenüber dem Bildsensor positionieren kann;
**dadurch gekennzeichnet, dass** sie weiterhin einen unter dem Sitz positionierten Drucker (15) umfasst, wobei wenigstens eine vertikale Linie durch den Sitz und den Drucker verläuft.

2. Fotokabine (10) gemäß Anspruch 1, bei der die Sitzfläche (16) auf einer die Sitzfläche mit dem Boden verbindenden Welle (17) montiert ist, wobei der Drucker neben der genannten Welle positioniert ist.

3. Fotokabine (10) gemäß einem der Ansprüche 1 oder 2, bei der der Drucker in einem Kasten montiert ist, wobei die Sitzfläche sich auf den genannten Kasten aufstützt.

4. Fotokabine (10) gemäß einem der Ansprüche 1 oder 2, bei der die Sitzfläche auf einer vertikalen Wand der Fotokabine montiert ist.

5. Fotokabine (10) gemäß einem der Ansprüche 1 bis 4, bei der die Sitzfläche fest ist und der Bildsensor in vertikaler Translation mobil ist.

6. Fotokabine (10) gemäß einem der Ansprüche 1 bis 5, die umfasst:
- eine mobile Ablageplatte (22) und einen Träger (21), der konfiguriert ist, um auf oder in einer vertikalen Wand der Kabine konfiguriert zu sein und um die mobile Ablageplatte in Bewegung zwischen einer eingezogenen vertikalen Konfiguration entlang der genannten Wand und einer ausgezogenen horizontalen Konfiguration zu stützen und
- einen sekundären Bildsensor (24), der auf oder in der Decke der Kabine oberhalb der mobilen Ablageplatte in ihrer ausgezogenen Konfiguration befestigt ist, wobei die mobile Ablageplatte (22) in ausgezogener Konfiguration zwischen der Sitzfläche (16) und dem Haupt-Bildsensor (11) gegenüber der Sitzfläche positioniert ist.

7. Fotokabine (10) gemäß Anspruch 6, bei der der Träger (21) der mobilen Ablageplatte (22) mit einer Klammer (27) versehen ist, die die mobile Ablageplatte in eingezogener Konfiguration zurückhält, wobei die Klammer durch eine zentrale Einheit (19) gesteuert ist.

8. Fotokabine (10) gemäß einem der Ansprüche 6 oder 7, die einen eingezogenen Konfigurationssensor der mobilen Ablageplatte (22) umfasst, wobei der genannte Fotografie-Drucker (15) in Abhängigkeit von dem Signal gesteuert ist, das von dem eingezogenen Konfigurationssensor gesteuert ist, um die Fotografie nicht zu drucken, solange die Ablageplatte nicht in eingezogener Konfiguration ist.

9. Fotokabine (10) gemäß einem der Ansprüche 6 bis 8, die ein Mittel zum Erzeugen (31) einer sichtbaren Animation umfasst, das konfiguriert ist, um auf oder in der Decke der Fotokabine (10) installiert zu sein.

10. Fotokabine (10) gemäß einem der Ansprüche 6 bis 9, die wenigstens einen Auslöser (26) umfasst, wobei das Erfassen eines Bildes durch den sekundären Bildsensor (24) und die Abspeicherung des genannten Bildes durch einen genannten Auslöser gesteuert sind.

11. Fotokabine (10) gemäß Anspruch 10, bei der wenigsten ein Auslöser (26) von der mobilen Ablageplatte (22) getragen ist.

12. Fotokabine (10) gemäß einem der voranstehenden Ansprüche 10 oder 11, bei der wenigstens ein Auslöser (26) auf einer lateralen Wand der mobilen Ablageplatte (22) getragen ist.

13. Fotokabine (10) gemäß einem der Ansprüche 10 bis 12, die eine zentrale Einheit (19) und einen Konfigurationssensor der mobilen Ablageplatte (22) umfasst, wobei der Auslöser (26) nur betätigt werden kann, wenn der Konfigurationssensor detektiert, dass die mobile Ablagefläche in ausgezogener Konfiguration ist und die zentrale Einheit das zulässt.

14. Fotokabine (10) gemäß einem der Ansprüche 6 bis 13, bei der die mobile Ablageplatte (22) umfasst:
- eine transparente Wand (30) und einen Boden (28), der in der ausgezogenen Konfiguration unter der transparenten Wand platziert ist, und
- Lichtquellen (29), die zwischen der transparenten Wand (30) und dem Boden (28) positioniert sind.

15. Fotokabine (10) gemäß einem der Ansprüche 6 bis 14, bei der die mobile Ablageplatte (22) Kanten (33) umfasst, die sich in der ausgezogenen Konfiguration auf den Seiten der Ablageplatte und auf jeder Seite des Kindes befinden, und / oder die mobile Ablageplatte (22) ist mit einem Sicherheitsgurt (32) versehen, um ein kleines Kind in liegender Position zurückzuhalten.

## Claims

1. Photo booth (10), which comprises:
- on one side, a main image sensor (11) and at least one light source (12); and,
- on the opposite side, a seat (16) for a user to position himself in front of the image sensor;
**characterized in that** it also comprises a printer (15) fitted under the seat, with at least one vertical line passing through the seat and the printer.

2. Photo booth (10) according to claim 1, wherein the seat (16) is mounted on a shaft (17) connecting the seat to the ground, with the printer placed next to said shaft.

3. Photo booth (10) according to one of claims 1 or 2, wherein the printer is mounted in a housing, with the seat resting on said housing.

4. Photo booth (10) according to one of claims 1 or 2, wherein the seat is mounted on a vertical wall of the photo booth.

5. Photo booth (10) according to one of claims 1 to 4, wherein the seat is fixed, and the image sensor can move in vertical translation.

6. Photo booth (10) according to one of claims 1 to 5, which comprises:
- a mobile tablet (22) and a mount (21) configured to be fastened on or in a vertical wall of the booth and to support the mobile tablet while moving between a vertical retracted position along said wall and a horizontal deployed configuration; and
- a secondary image sensor (24) fastened on or in the ceiling of the booth, above the mobile tablet in its deployed position,
the mobile tablet (22) being positioned, in its deployed configuration, between the seat (16) and the main image sensor (11) opposite the seat.

7. Photo booth (10) according to claim 6, wherein the mount (21) of the mobile tablet (22) is fitted with a latch (27) to hold the tablet in the retracted configuration, with the latch controlled by a control unit (19).

8. Photo booth (10) according to one of claims 6 or 7, which comprises a sensor capturing the retracted configuration of the mobile tablet (22), said photograph printer (15) being controlled as a function of the signal emitted by the retracted configuration sensor so no photographs are printed while the tablet isn't in its retracted configuration.

9. Photo booth (10) according to one of claims 6 to 8, which comprises a means for generating (31) a visible animation configured to be installed on or in the ceiling of the photo booth (10).

10. Photo booth (10) according to one of claims 6 to 9, which comprises at least one trigger (26), where the capture of an image by the secondary image sensor (24) and the storage of said image is controlled by one said trigger.

11. Photo booth (10) according to claim 10, wherein at least one trigger (26) is borne by the mobile tablet (22).

12. Photo booth (10) according to one of claims 10 or 11, wherein at least one trigger (26) is borne by a side wall of the mobile tablet (22).

13. Photo booth (10) according to one of claims 10 to 12, which comprises a control unit (19) and a sensor capturing the configuration of the mobile tablet (22), where the trigger (26) can only be actuated if the configuration sensor detects that the mobile tablet is in its deployed configuration and the control unit authorizes it.

14. Photo booth (10) according to one of claims 6 to 13, wherein the mobile tablet (22) comprises:
- a transparent wall (30) and a background (28) placed, in the deployed configuration, under the transparent wall; and
- light sources (29) placed between the transparent wall (30) and the background (28).

15. Photo booth (10) according to one of claims 6 to 14, wherein the mobile tablet (22) comprises raised edges (33) located, in the deployed configuration, on the sides of the tablet, on either side of the child, and/or the mobile tablet (22) is fitted with a safety belt (32) to hold a young child in the lying position.
